# EUROPÄISCHE PATENTSCHRIFT

(11) **EP 3 328 681 B1**
(45) Veröffentlichungstag und Bekanntmachung des Hinweises auf die Patenterteilung: **06.09.2023**
(21) Anmeldenummer: 16766474.7
(22) Anmeldetag: 27.07.2016
(51) Int. Cl.: B60L 53/60

(54) **SYSTEM UND VERFAHREN ZUR ENERGIEVERSORGUNG EINES ELEKTRISCHEN VERBRAUCHERS SOWIE EINE ENERGIESTATION**
SYSTEM AND METHOD FOR SUPPLYING ENERGY TO AN ELECTRICAL CONSUMER AND AN ENERGY STATION
SYSTÈME ET PROCÉDÉ POUR L'ALIMENTATION EN ÉNERGIE D'UN CONSOMMATEUR ÉLECTRIQUE ET STATION D'ÉNERGIE

(30) Priorität: 27.07.2015 DE 102015214164
(43) Veröffentlichungstag der Anmeldung: 06.06.2018
(60) Teilanmeldung: 23164312.3
(73) Patentinhaber: POWERJames GmbH, 68307 Mannheim (DE)
(72) Erfinder: STECKENBORN, Thomas, 68239 Mannheim (DE); GANTER, Axel, 68169 Mannheim (DE); MOSSLER, Jonas Carl, 68549 Ilvesheim (DE)
(74) Vertreter: Ullrich & Naumann PartG mbB
(86) Internationale Anmeldenummer: PCT/DE2016/200345
(87) Internationale Veröffentlichungsnummer: WO 2017/016563

(56) Entgegenhaltungen:
- EP-A1- 2 861 451
- US-A1- 2012 095 830
- US-A1- 2013 035 812
- US-A1- 2015 102 775
- US-A1- 2015 193 990

## Beschreibung

Die Erfindung betrifft ein System und ein Verfahren zur Energieversorgung eines elektrischen Verbrauchers, insbesondere zum Laden eines akkubetriebenen Geräts, vorzugsweise eines Fahrzeugs mit einem Elektroantrieb. Des Weiteren betrifft die Erfindung eine Energiestation zur Energieversorgung eines elektrischen Verbrauchers.

Verfahren und Systeme sowie Energiestationen, nämlich Ladestationen, zum Laden eines akkubetriebenen Geräts sind aus dem Stand der Technik seit Jahren bekannt. Beispielsweise werden Elektrofahrzeuge an als Stromtankstellen bezeichneten Ladestationen aufgeladen. Diese sind im einfachsten Fall als Steckdose ausgebildet, an der das Elektrofahrzeug über eine Kabelverbindung aufgeladen werden kann.

Das Dokument EP 2 861 451 A1 beschreibt eine Ladestation für Elektrofahrzeuge mit einer einen Energieverbrauch eines angeschlossenen Elektrofahrzeugs messenden Messeinrichtung, einer einen Messwert der Messeinrichtung in Daten wandelnden Recheneinrichtung, und einer zumindest die Daten an einen Zentralrechner übermittelnden Kommunikationseinrichtung. Eine Übertragung der Daten an den Zentralrechner erfolgt dann, wenn die Kommunikationseinrichtung zum Aufbau einer Nahfeldkommunikationsverbindung mit einem mobilen Kommunikationsgerät eingerichtet ist, derart, dass über die Nahfeldkommunikationsverbindung mit dem Kommunikationsgerät eine zur Übermittlung der Daten geeignete Weitverkehrsverbindung mit dem Zentralrechner etablierbar ist.

Der Ausbau der Elektromobilität ist seit mehreren Jahren erklärtes Ziel von Politik und Wirtschaft. Neben der Entwicklung leistungsfähiger und zuverlässiger Fahrzeuge ist der Ausbau des Netzes von Ladestationen ein wesentliches Kriterium, um die Akzeptanz dieser neuen Technologie beim Verbraucher zu erhöhen. Durch die meist geringe Reichweite der Elektrofahrzeuge und die recht lange Ladedauer ist ein relativ feinmaschiges Netz an Ladestationen notwendig.

Zur Abrechnung der durch den Ladevorgang entstandenen Kosten gegenüber dem Nutzer des Elektrofahrzeugs sind sogenannte "smarte Ladestationen" bekannt. Diese benötigen eine dauerhafte Internetverbindung, um die zur Abrechnung benötigten Daten mit einer Abrechnungseinrichtung - beispielsweise einem Server bzw. einem Computer- auszutauschen. Die Abrechnungseinrichtung stellt die durch den Ladevorgang entstandenen Kosten dem jeweiligen Nutzer in Rechnung.

Somit muss der Ort, an dem eine solche Ladestation installiert ist, eine kabelgebundene oder zumindest eine drahtlose Internetverbindung zu Verfügung stellen. Daher ist beispielsweise die Installation von smarten Ladestationen in einem bereits bestehenden Parkhaus mit erheblichem Aufwand verbunden. Parkhäuser verfügen regelmäßig über keinerlei Verkabelung um eine Internetverbindung zur Verfügung zu stellen. Des Weiteren ist die Realisierung eines drahtlosen Netzwerkes aufgrund der massiven Bauweise von Parkhäusern nur mit erheblichem Aufwand realisierbar.

In der Praxis wird dieses Problem dadurch gelöst, dass die Ladestationen von Mitarbeitern der Betreiberfirma einzeln ausgelesen werden, um den jeweiligen Nutzern die durch ihren Ladevorgang entstandenen Kosten in Rechnung stellen zu können. Der mit einer solchen Vorgehensweise verbundene Aufwand verursacht hohe Kosten.

Aufgrund der voranstehend genannten Probleme ist es daher lediglich mit erheblichem konstruktiven, zeitlichen und finanziellen Aufwand möglich, Ladestationen zur Verbesserung des Stromtankstellennetzes an beliebigen Orten zu installieren.

Des Weiteren sind aus der Praxis Energiestationen zur Energieversorgung von elektrischen Verbrauchern an öffentlich zugänglichen Orten wie zum Beispiel Wasserkochern auf einem Campingplatz, einem Boot an einem Anlegeplatz etc vorbekannt. Auch hierbei ist problematisch, dass die Energiestation über eine Internetverbindung verfügen muss, um die mit der Energieversorgung anfallenden Kosten gegenüber dem richtigen Nutzer abzurechnen.

Der vorliegenden Erfindung liegt daher die Aufgabe zugrunde, ein System sowie ein Verfahren anzugeben, bei dem mit konstruktiv einfachen Mitteln ein elektrischer Verbraucher mit Energie versorgt werden kann und die dabei entstehenden Kosten auf einfache Weise dem Nutzer eindeutig zuordenbar sind. Des Weiteren soll eine entsprechende Energiestation angegeben werden.

Erfindungsgemäß wird die voranstehende Aufgabe durch die Merkmale des Anspruchs 1 gelöst. Danach ist ein System zur Energieversorgung eines elektrischen Verbrauchers, insbesondere zum Laden eines akkubetriebenen Geräts, vorzugsweise eines Fahrzeugs mit einem Elektroantrieb, umfassend eine Energiestation, ein mobiles Endgerät und eine Recheneinrichtung beansprucht, wobei die Energiestation eine Kommunikationseinrichtung zum Austauschen von Daten mit dem mobilen Endgerät aufweist und wobei Daten von dem mobilen Endgerät über eine Sendeeinrichtung an die Recheneinrichtung übertragbar sind. Das System ist dadurch gekennzeichnet, dass Daten von der Energiestation auch dann, wenn das mobile Endgerät in unmittelbarer Nähe der Energiestation keine Verbindung zu der Recheneinrichtung aufbauen kann über das mobile Endgerät an die Recheneinrichtung übermittelbar sind, wobei das mobile Endgerät die Daten an die Recheneinrichtung übermittelt, sobald das mobile Endgerät über eine solche Verbindung verfügt, und dass das mobile Endgerät eines Nutzers des Systems Daten, insbesondere Abrechnungsdaten, zumindest eines vorherigen Nutzers von der Energiestation empfangen und die Daten des vorherigen Nutzers an die Recheneinrichtung übertragen kann.

In erfindungsgemäßer Weise ist dabei erkannt worden, dass die zugrundeliegende Aufgabe in überraschend einfacher Weise gelöst werden kann, indem ein mobiles Endgerät derart ausgebildet ist, dass es sowohl mit der Energiestation als auch mit der Recheneinrichtung kommunizieren kann. Das mobile Endgerät dient somit zum Übertragen der Abrechnungsdaten von der Energiestation an die Recheneinrichtung, ähnlich einem "Boten". Auch wenn das mobile Endgerät in unmittelbarer Nähe der Energiestation keine Verbindung zu der Recheneinrichtung aufbauen kann, da beispielsweise innerhalb eines Parkhauses keine drahtlose Internetverbindung zur Verfügung steht, so wird dem mobilen Endgerät aufgrund seines mobilen Charakters früher oder später eine solche Verbindung zur Verfügung stehen. Beispielsweise nach dem Verlassen des Parkhauses kann das mobile Endgerät über eine drahtlose Internetverbindung die zuvor von der Energiestation übermittelten Abrechnungsdaten an die Abrechnungseinrichtung übertragen. Des Weiteren ist denkbar, dass das mobile Endgerät "weitere Daten", bspw. Konfigurationsdaten, Informationsdaten, Softwareupdates "mitbringt" und an die Energiestation übermittelt, so dass eine bidirektionale Kommunikation stattfindet. Somit könnte die Energiestation sowohl Daten von dem mobilen Endgerät empfangen als auch Daten zur Übermittlung an eine externe Recheneinheit, bspw. eine Abrechnungseinrichtung, an das mobile Endgerät übermitteln. Ferner könnte das mobile Endgerät beispielsweise Pre-Paid-Daten an die Energieeinrichtung übermitteln, um dadurch die durch die Energieversorgung anfallenden Kosten direkt zu begleichen.

Bei dem erfindungsgemäßen System ist es weiterhin von Vorteil, dass ein mobiles Endgerät auch dann Daten von der Energiestation bzw. der Ladestation erhalten kann und/oder an diese übermittelt, wenn gar keine Energieversorgung erfolgt. Beispielsweise kann das mobile Endgerät eines Nutzers des Systems automatisch Daten, insbesondere Abrechnungsdaten, Dritter von der Energiestation empfangen, sobald er sich Nahe der Energiestation bzw. der Ladestation befindet, so dass eine Verbindung über die Kommunikationseinrichtung herstellbar ist. Das mobile Endgerät kann die "fremden" Daten an die Recheneinrichtung bzw. Abrechnungseinrichtung übertragen, sobald eine entsprechende Verbindung zur Verfügung steht. Alternativ oder zusätzlich könnte das mobile Endgerät "weitere Daten", insbesondere Konfigurationsdaten, Informationsdaten, Softwareupdates etc., an die Energiestation übermitteln, sobald eine Verbindung über die Kommunikationseinrichtung herstellbar ist.

In Bezug auf das beanspruchte System und das beanspruchte Verfahren sei darauf hingewiesen, dass die "Energiestation" beispielsweise als Ladestation und/oder als Netzteil ausgebildet sein kann. Bei dem elektrischen Verbraucher kann es sich um Campingausrüstung - beispielsweise einen Wasserkocher - ein Boot, eine Werkzeugmaschine und/oder eine Baumaschine handeln. Des Weiteren kann der elektrische Verbraucher als akkubetriebenes Gerät, insbesondere als Fahrzeug mit einem Elektroantrieb, ausgebildet sein.

Weiterhin ist der Ausdruck "mobiles Endgerät" im weitesten Sinne zu verstehen ist. Hierbei kann es sich beispielsweise um ein Mobiltelefon, ein Smartphone, einen Hand-Held-Computer, einen Tablet-Computer, etc. handeln. Des Weiteren ist denkbar, dass das mobile Endgerät in dem zu ladenden Elektrofahrzeug integriert ist, d.h. durch das Elektrofahrzeug realisiert ist. Wesentlich ist lediglich, dass das mobile Endgerät über Schnittstellen zur Kommunikation mit der Energiestation bzw. der Ladestation und der Recheneinrichtung bzw. der Abrechnungseinrichtung verfügt. Unter dem Begriff "Recheneinrichtung" ist beispielsweise ein Server bzw. ein Computer mit einer Internetverbindung zu verstehen. Die Recheneinrichtung kann im Konkreten als Abrechnungseinrichtung ausgebildet sein, mit dem die durch die Energieversorgung, beispielsweise einem Ladevorgang, entstandenen Kosten dem jeweiligen Nutzer in Rechnung gestellt werden. Alternativ oder zusätzlich kann die Recheneinrichtung dazu dienen Verbrauchsdaten, beispielsweise einer Baumaschine und/oder einer Werkzeugmaschine auszuwerten, so dass das System ein Gateways im "Internet-of-Things" zur Verfügung stellt.

Die Energiestation, beispielsweise eine Ladestation, muss nicht zwangsweise über eine Internetverbindung verfügen. Vielmehr kommuniziert die Energiestation, vorzugsweise ausschließlich, mit dem mobilen Endgerät. Somit kann die Energiestation an beliebigen Orten installiert werden, wobei lediglich eine Verbindung zu einem Stromnetz benötigt wird. Durch diese raffinierte Ausgestaltung ist es möglich, beispielsweise die Parkplätze eines Parkhauses zu sogenannten "Park and Charge"-Plätzen aufzurüsten, an denen Elektrofahrzeuge aufladbar sind, wobei die dadurch entstehenden Kosten dem Nutzer auf einfache Weise in Rechnung gestellt werden können. Die Energiestation ist somit an den verschiedensten Orten installierbar.

In vorteilhafter Weise ist zur Realisierung der Verbindung mit dem Stromnetz ein Stecker angeordnet. Somit kann die Energiestation an eine gängige Steckdose, beispielsweise eine Schuko-Steckdose, angeschlossen werden. Eine Installation der Energiestation ist dadurch auf besonders einfache Weise möglich.

Des Weiteren ist denkbar, dass die Mittel zur Übertragung elektrischer Energie durch zumindest eine Spule zum induktiven Laden realisiert sind. Diese Konstruktion erlaubt eine kabellose und folglich äußerst komfortable Möglichkeit den elektrischen Verbraucher mit Energie zu Versorgen, beispielsweise das akkubetriebene Gerät aufzuladen. Alternativ oder zusätzlich können die Mittel zur Übertragung durch einen Stecker realisiert sein. Bei dem Stecker kann es sich beispielsweise um einen Schuko-Stecker, einen Campingstecker (CEE blau) oder einen Drehstromstecker (CEE rot) handeln. Eine Steckverbindung zeichnet sich durch ihre einfache Konstruktion und sichere Übertragung der elektrischen Energie aus.

Um eine zuverlässige Datenverbindung zwischen der Energiestation und dem mobilen Endgerät zu realisieren, kann die Kommunikationseinrichtung als Near-Field-Communication-Schnittstelle (NFC-Schnittstelle) und/oder Bluetooth-Schnittstelle und/oder Infrarot-Schnittstelle realisiert sein. Im Konkreten ist jede Art von kabelloser oder auch kabelgebundener Kommunikationseinrichtung denkbar, die eine Datenverbindung zwischen Energiestation und mobilem Endgerät gewährleistet.

Zur Eingabe von Informationen, beispielsweise betreffend die Identifikation des Nutzers und/oder des Ladevorgangs, kann eine Eingabeeinrichtung angeordnet sein. Die Eingabeeinrichtung kann beispielsweise zur Eingabe von Sprachbefehlen ausgebildet sein. Alternativ oder zusätzlich ist auch denkbar, dass ein Touch-Display als Eingabeeinrichtung vorgesehen ist.

Weiterhin sei darauf hingewiesen, dass die voranstehend beschriebene Energiestation Teil des Systems gemäß Anspruch 1 sein kann. Folglich beziehen sich die Merkmale und Vorteilsangaben betreffend die Ansprüche der Energiestation auch auf das erfindungsgemäße System.

Die zugrundeliegende Aufgabe wird weiterhin durch das Verfahren gemäß Anspruch 6 gelöst. Danach ist ein Verfahren zur Energieversorgung eines elektrischen Verbrauchers, beispielsweise zum Laden eines akkubetriebenen Geräts, insbesondere eines Fahrzeugs mit einem Elektroantrieb, vorzugsweise unter Verwendung eines Systems nach Anspruch 1 und/oder einer Energiestation nach einem der Ansprüche 1 bis 5, beansprucht, umfassend die folgenden Verfahrensschritte:
- Übermittlung von Daten, beispielsweise von Identifikationsdaten und ggf. von Ladedaten, mittels eines mobilen Endgeräts an die Energiestation,
- Aktivierung der Energieversorgung, insbesondere des Ladevorgangs, durch die Energiestation und Übertragung von Daten, insbesondere von Abrechnungsdaten, von der Energiestation an das mobile Endgerät,
- Übertragung der Daten, insbesondere der Abrechnungsdaten über ein, vorzugsweises mobiles, Netzwerk durch das mobile Endgerät an eine Recheneinrichtung.

Das Verfahren ist dadurch gekennzeichnet, dass Daten auch dann, wenn das mobile Endgerät in unmittelbarer Nähe der Energiestation keine Verbindung zu der Recheneinrichtung aufbauen kann, von der Energiestation über das mobile Endgerät an die Recheneinrichtung übermittelt werden, wobei das mobile Endgerät die Daten an die Recheneinrichtung übermittelt, sobald das mobile Endgerät über eine solche Verbindung verfügt, und dass das mobile Endgerät eines Nutzers der Energiestation Daten, insbesondere Abrechnungsdaten, zumindest eines vorherigen Nutzers von der Energiestation empfangen und die Daten des vorherigen Nutzers an die Recheneinrichtung übertragen kann.

Erfindungsgemäß können zunächst Identifikationsdaten mittels eines mobilen Endgeräts an die Energiestation, beispielsweise eine Ladestation, übertragen werden. Dies kann über eine NFC-Schnittstelle, eine Bluetooth-Schnittstelle und/oder eine Infrarot-Schnittstelle erfolgen. Bei den Identifikationsdaten kann es sich um jegliche Daten handeln, die es ermöglichen, die mit der Energieversorgung des elektrischen Verbrauchers entstehenden Kosten dem richtigen Nutzer zuordnen zu können. Bei den von dem mobilen Endgerät übermittelten Daten kann es sich alternativ oder zusätzlich um "weitere Daten", bspw. Konfigurationsdaten, Informationsdaten oder Softwareupdates handeln, so dass eine bidirektionale Kommunikation stattfindet. Somit könnte die Energiestation sowohl Daten von dem mobilen Endgerät empfangen als auch Daten zur Übermittlung an eine externe Recheneinheit, bspw. eine Abrechnungseinrichtung, an das mobile Endgerät übermitteln. Ferner könnte das mobile Endgerät beispielsweise Pre-Paid-Daten an die Energieeinrichtung übermitteln, um dadurch die durch die Energieversorgung anfallenden Kosten direkt zu begleichen.

Dabei ist weiterhin denkbar, dass vor, während und/oder nach der Übermittlung der Identifikationsdaten bzw. der "weiteren Daten" zusätzliche Daten, beispielswese Ladedaten betreffend den Ladevorgang von dem mobilen Endgerät an die Energiestation bzw. die Ladestation übermittelt werden. Die Ladedaten können beispielsweise Informationen bezüglich der gewünschten Ladedauer, der benötigten Leistung, des zu ladenden Geräts etc. umfassen. Die Ladestation aktiviert sodann den Ladevorgang. Bereits vor der Aktivierung des Ladevorgangs und/oder während bzw. nach dem Ladevorgang kann die Ladestation Abrechnungsdaten an das mobile Endgerät übertragen. Hierzu kann die gleiche Kommunikationsschnittstelle verwendet werden, über die die Identifikationsdaten von dem mobilen Endgerät an die Ladestation übermittelt werden. Somit kann die Ladestation in vorteilhafterweise lediglich eine einzige Kommunikationseinrichtung zur, vorzugsweise ausschließlichen, Kommunikation mit dem mobilen Endgerät aufweisen. Alternativ oder zusätzlich ist denkbar, dass es sich bei den Daten um Regeldaten für die Energiestation bzw. die Ladestation handelt, so dass in einem SmartGrid Regeldaten auch ohne Internetanbindung übertragbar sind. An dieser Stelle sei darauf hingewiesen, dass die in Bezug auf das erfindungsgemäße Verfahren beschriebenen Daten auch einen Teil der Offenbarung des erfindungsgemäßen Systems und der erfindungsgemäßen Energiestation darstellen.

Sobald das mobile Endgerät über eine Verbindung mit einem Netzwerk - beispielsweise dem Internet - verfügt, werden die Daten, beispielsweise die Abrechnungsdaten, an eine Recheneinrichtung, beispielsweise eine Abrechnungseinrichtung, übermittelt. Durch die Abrechnungseinrichtung können die angefallenen Kosten dem richtigen Nutzer in Rechnung gestellt werden.

Alternativ oder zusätzlich können zumindest ein Teil der Daten bzw. der Ladedaten durch einen Sprachbefehl an die Energiestation übermittelt werden. Dabei ist denkbar, dass der Sprachbefehl unmittelbar durch die Energiestation erkannt wird oder durch das mobile Endgerät - beispielsweise ein Smartphone - aufgenommen und an die Energiestation übermittelt wird.

In besonders vorteilhafter Weise können zusätzlich Daten, insbesondere Abrechnungsdaten, zumindest eines vorherigen Nutzers von der Energiestation an das mobile Endgerät übertragen werden, wobei die Daten des vorherigen Nutzers sodann von dem mobilen Endgerät über das Netzwerk an die Abrechnungseinrichtung übermittelt werden. Somit wird gegenüber jedem Nutzer der Energiestation zuverlässig abgerechnet, selbst wenn er nicht persönlich seine Daten über sein mobiles Endgerät an die Recheneinrichtung bzw. Abrechnungseinrichtung übermittelt hat.

Das mobile Endgerät kann beispielsweise in den elektrischen Verbraucher bzw. das akkubetriebene Gerät - das Elektrofahrzeug - integriert sein und/oder als Smartphone, Tablet-PC, Hand-Held-PC etc. ausgebildet sein.

An dieser Stelle sei darauf hingewiesen, dass die zuvor erörterten Merkmale zu dem erfindungsgemäßen Verfahren auch eine vorrichtungsgemäße Ausprägung haben können. Eine Kombination dieser Merkmale mit den das System und/oder die Energiestation betreffenden Merkmalen ist nicht nur möglich, sondern von Vorteil.

Es gibt nun verschiedene Möglichkeiten, die Lehre der vorliegenden Erfindung in vorteilhafter Weise auszugestalten und weiterzubilden. Dazu ist einerseits auf die den Ansprüchen 2 und 7 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein Ausführungsbeispiel eines erfindungsgemäßen Systems,
- Fig. 2: in einer schematischen Darstellung ein Ausführungsbeispiel einer erfindungsgemäßen Energiestation und
- Fig. 3: ein Ablaufdiagramm eines Ausführungsbeispiels eines erfindungsgemäßen Verfahrens.

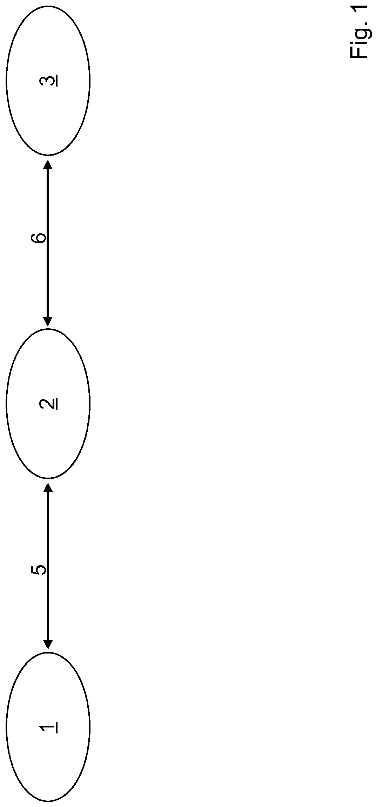

Fig. 1 zeigt in einer schematischen Darstellung ein Ausführungsbeispiel eines erfindungsgemäßen Systems. Das System umfasst eine Energiestation 1, ein mobiles Endgerät 2 und eine Recheneinrichtung 3.

Die Energiestation 1 ist beispielsweise als Ladestation 1 ausgebildet und dient zum Laden eines akkubetriebenen Geräts, beispielsweise eines Fahrzeugs mit einem Elektroantrieb. Über eine Kommunikationseinrichtung 4 ist eine erste Datenverbindung 5 zwischen der Energiestation 1 und dem mobilen Endgerät 2 realisiert, über welche Daten ausgetauscht werden können. Die Kommunikationseinrichtung 4 ist in Fig. 1 nicht dargestellt. Das mobile Endgerät 2 verfügt somit über eine mit der Kommunikationseinrichtung 4 der Energiestation 1 verknüpfbare Schnittstelle, um die erste Datenverbindung 5 zu realisieren.

Des Weiteren umfasst das mobile Endgerät 2 eine Sendeeinrichtung bzw. eine Sende-/Empfangseinrichtung, um über eine zweite Datenverbindung 6, vorzugsweise eine Internetverbindung, insbesondere über ein mobiles Netzwerk, mit der Recheneinrichtung 3, beispielsweise einer Abrechnungseinrichtung, zu kommunizieren.

Aus Fig. 1 wird deutlich, dass die Energiestation 1 ausschließlich mit dem mobilen Endgerät 2 Daten austauscht und dabei die Daten an das mobile Endgerät 2 übergibt. Sobald das mobile Endgerät 2 über eine zweite Datenverbindung 6 verfügt, übermittelt es diese Daten an die Recheneinrichtung 3. Somit kann beispielsweise die als Ladestation 1 ausgebildete Energiestation ohne eine Internetverbindung realisiert werden und muss dennoch nicht händisch von Mitarbeitern der Betreiberfirma zum Zweck der Abrechnung ausgelesen werden.

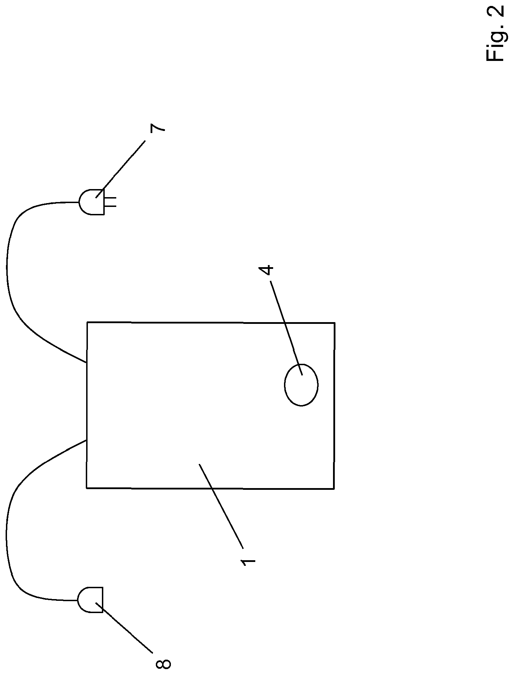

Fig. 2 zeigt in einer schematischen Darstellung ein Ausführungsbeispiel einer erfindungsgemäßen Energiestation 1. Die Energiestation 1 umfasst eine Verbindung 7 zu einem Stromnetz, wobei im hier dargestellten Ausführungsbeispiel die Verbindung 7 durch einen Stecker 7 realisiert ist. Des Weiteren sind Mittel 8 zur Übertragung von elektrischer Energie an den Verbraucher vorgesehen. Die Mittel 8 sind ebenfalls als Stecker 8 realisiert. Ferner ist denkbar, dass die Mittel 8 zur Übertragung elektrischer Energie durch zumindest eine Spule zum induktiven Laden des Verbrauchers ausgebildet sind.

Des Weiteren umfasst die Energiestation 1 eine Kommunikationseinrichtung 4 zum Austauschen von Daten mit dem nicht dargestellten mobilen Endgerät 2. Aus Fig. 2 wird deutlich, dass durch den modularen Aufbau der Energiestation 1, diese auf besonders einfache Weise insbesondere zum Aufrüsten eines beliebigen Parkplatzes - beispielsweise in einem Parkhaus - verwendbar ist.

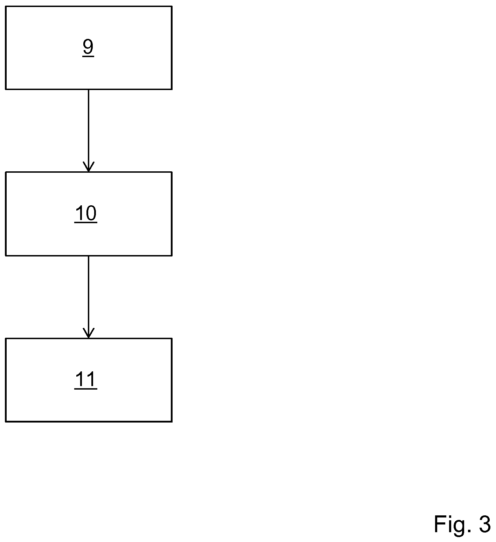

Fig. 3 zeigt ein Ablaufdiagramm eines Ausführungsbeispiels eines erfindungsgemäßen Verfahrens.

In einem ersten Verfahrensschritt 9 werden Daten, insbesondere Identifikationsdaten und ggf. Ladedaten, durch das mobile Endgerät 2 an die Energiestation 1 übermittelt. In einem zweiten Verfahrensschritt 10 wird die Energieversorgung durch die Energiestation 1 aktiviert, so dass elektrische Leistung über die Mittel 8 von der Energiestation 1 an den Verbraucher - das Elektrofahrzeug - übertragen wird. Des Weiteren werden Daten, insbesondere Abrechnungsdaten, von der Energiestation 1 an das mobile Endgerät 2 übertragen. Die Daten können dabei insbesondere sowohl den aktuell ausgeführten Ladevorgang betreffen als auch Abrechnungsdaten eines vorherigen Nutzers umfassen.

In einem dritten Verfahrensschritt 11 werden die Daten von dem mobilen Endgerät 2 über die zweite Datenverbindung 6 an eine Recheneinrichtung 3, vorzugsweise eine Abrechnungseinrichtung 3, übertragen. Die Übertragung erfolgt im Konkreten über eine Internetverbindung, vorzugsweise über eine mobile Internetverbindung.

Hinsichtlich weiterer vorteilhafter Ausgestaltungen der erfindungsgemäßen Vorrichtungen sowie des erfindungsgemäßen Verfahrens wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtungen sowie des erfindungsgemäßen Verfahrens lediglich zur Erörterung der beanspruchten Lehre dienen, diese jedoch nicht auf die Ausführungsbeispiele einschränken.

### Bezugszeichenliste

- 1: Energiestation
- 2: mobiles Endgerät
- 3: Recheneinrichtung
- 4: Kommunikationseinrichtung
- 5: erste Datenverbindung
- 6: zweite Datenverbindung
- 7: Verbindung
- 8: Mittel zur Übertragung elektrischer Energie
- 9: erster Verfahrensschritt
- 10: zweiter Verfahrensschritt
- 11: dritter Verfahrensschritt

## Patentansprüche

1. System zur Energieversorgung eines elektrischen Verbrauchers, insbesondere zum Laden eines akkubetriebenen Geräts, vorzugsweise eines Fahrzeugs mit einem Elektroantrieb, umfassend eine Energiestation (1), ein mobiles Endgerät (2) und eine Recheneinrichtung (3), wobei die Energiestation (1) eine Kommunikationseinrichtung (4) zum Austauschen von Daten mit dem mobilen Endgerät (2) aufweist und wobei Daten von dem mobilen Endgerät (2) über eine Sendeeinrichtung an die Recheneinrichtung (3) übertragbar sind, **dadurch gekennzeichnet, dass** Daten auch dann, wenn das mobile Endgerät (2) in unmittelbarer Nähe der Energiestation (1) keine Verbindung zu der Recheneinrichtung (3) aufbauen kann, von der Energiestation (1) über das mobile Endgerät (2) an die Recheneinrichtung (3) übermittelbar sind, wobei das mobile Endgerät (2) die Daten an die Recheneinrichtung (3) übermittelt, sobald das mobile Endgerät (2) über eine solche Verbindung verfügt, und dass das mobile Endgerät (2) eines Nutzers des Systems Daten, insbesondere Abrechnungsdaten, zumindest eines vorherigen Nutzers von der Energiestation (1) empfangen und die Daten des vorherigen Nutzers an die Recheneinrichtung (3) übertragen kann.

2. System nach Anspruch 1, **dadurch gekennzeichnet, dass** ein Stecker zur Realisierung der Verbindung (7) mit dem Stromnetz angeordnet ist.

3. System nach Anspruch 1 oder 2, **dadurch gekennzeichnet, dass** die Mittel (8) zur Übertragung elektrischer Energie durch zumindest eine Spule zum induktiven Laden und/oder durch einen Stecker realisiert sind.

4. System nach einem der Ansprüche 1 bis 3, **dadurch gekennzeichnet, dass** die Kommunikationseinrichtung (4) als NFC-Schnittstelle und/oder Bluetooth-Schnittstelle und/oder Infrarot-Schnittstelle realisiert ist.

5. System nach einem der Ansprüche 1 bis 4, **dadurch gekennzeichnet, dass** eine Eingabeeinrichtung, insbesondere zur Eingabe von Sprachbefehlen, angeordnet ist.

6. Verfahren zur Energieversorgung eines elektrischen Verbrauchers, beispielsweise zum Laden eines akkubetriebenen Geräts, insbesondere eines Fahrzeugs mit einem Elektroantrieb, vorzugsweise unter Verwendung eines Systems nach einem der Ansprüche 1 bis 5, umfassend die folgenden Verfahrensschritte:
- Übermittlung von Daten, beispielsweise von Identifikationsdaten und ggf. von Ladedaten, mittels eines mobilen Endgeräts (2) an die Energiestation (1),
- Aktivierung der Energieversorgung, insbesondere des Ladevorgangs, durch die Energiestation und Übertragung von Daten, insbesondere von Abrechnungsdaten, von der Energiestation (1) an das mobile Endgerät (2),
- Übertragung der Daten, insbesondere der Abrechnungsdaten, über ein, vorzugsweise mobiles, Netzwerk durch das mobile Endgerät (2) an eine Recheneinrichtung (3), **dadurch gekennzeichnet, dass** Daten auch dann, wenn das mobile Endgerät (1) in unmittelbarer Nähe der Energiestation (1) keine Verbindung zu der Recheneinrichtung (3) aufbauen kann, von der Energiestation (1) über das mobile Endgerät (2) an die Recheneinrichtung (3) übermittelt werden, wobei das mobile Endgerät die Daten an die Recheneinrichtung übermittelt, sobald das mobile Endgerät (2) über eine solche Verbindung verfügt, und dass das mobile Endgerät (2) eines Nutzers der Energiestation (1) Daten, insbesondere Abrechnungsdaten, zumindest eines vorherigen Nutzers von der Energiestation (1) empfangen und die Daten des vorherigen Nutzers an die Recheneinrichtung (3) übertragen kann.

7. Verfahren nach Anspruch 6, **dadurch gekennzeichnet, dass** die Daten, insbesondere die Ladedaten, durch einen Sprachbefehl an die Energiestation (1) übermittelt werden.

8. Verfahren nach Anspruch 6 oder 7, **dadurch gekennzeichnet, dass** als mobiles Endgerät (2) der elektrische Verbraucher und/oder ein Smartphone verwendet wird.

## Claims

1. System for supplying energy to an electrical consumer, in particular for charging a battery-operated device, preferably a vehicle having an electric drive, comprising an energy station (1), a mobile terminal (2) and a computing device (3), wherein the energy station (1) has a communication device (4) for exchanging data with the mobile terminal (2), and wherein data can be transmitted from the mobile terminal (2) to the computing device (3) via a transmitting device, **characterized in that** data can also be transmitted from the energy station (1) to the computing device (3) via the mobile terminal (2) when the mobile terminal (2) cannot set up a connection to the computing device (3) in the immediate vicinity of the energy station (1), wherein the mobile terminal (2) transmits the data to the computing device (3) as soon as the mobile terminal (2) has such a connection, and **in that** the mobile terminal (2) belonging to a user of the system can receive data, in particular billing data, relating to at least one previous user from the energy station (1) and can transmit the data relating to the previous user to the computing device (3).

2. System according to Claim 1, **characterized in that** a plug for implementing the connection (7) to the power supply system is arranged.

3. System according to Claim 1 or 2, **characterized in that** the means (8) for transmitting electrical energy are implemented by means of at least one coil for inductive charging and/or by means of a plug.

4. System according to one of Claims 1 to 3, **characterized in that** the communication device (4) is implemented as an NFC interface and/or a Bluetooth interface and/or an infrared interface.

5. System according to one of Claims 1 to 4, **characterized in that** an input device, in particular for inputting voice commands, is arranged.

6. Method for supplying energy to an electrical consumer, for example for charging a battery-operated device, in particular a vehicle having an electric drive, preferably using a system according to one of Claims 1 to 5, comprising the following method steps of:
- transmitting data, for example identification data and possibly charging data, to the energy station (1) by means of a mobile terminal (2),
- activating the supply of energy, in particular the charging process, by the energy station and transmitting data, in particular billing data, from the energy station (1) to the mobile terminal (2),
- transmitting the data, in particular the billing data, to a computing device (3) by way of the mobile terminal (2) via a network, preferably a mobile network, **characterized in that** data are also transmitted from the energy station (1) to the computing device (3) via the mobile terminal (2) when the mobile terminal (1) cannot set up a connection to the computing device (3) in the immediate vicinity of the energy station (1), wherein the mobile terminal transmits the data to the computing device as soon as the mobile terminal (2) has such a connection, and **in that** the mobile terminal (2) belonging to a user of the energy station (1) can receive data, in particular billing data, relating to at least one previous user from the energy station (1) and can transmit the data relating to the previous user to the computing device (3).

7. Method according to Claim 6, **characterized in that** the data, in particular the charging data, are transmitted to the energy station (1) by means of a voice command.

8. Method according to Claim 6 or 7, **characterized in that** the electrical consumer and/or a smartphone is/are used as the mobile terminal (2).

## Revendications

1. Système pour l'alimentation en énergie d'un consommateur électrique, plus particulièrement pour la charge d'un appareil alimenté par des batteries, de préférence d'un véhicule avec un entraînement électrique, comprenant une station d'énergie (1), un terminal mobile (2) et un dispositif de calcul (3), dans lequel la station d'énergie (1) comprend un dispositif de communication (4) pour l'échange de données avec le terminal mobile (2) et dans lequel des données peuvent être transmises par le terminal mobile (2) par l'intermédiaire d'un dispositif émetteur au dispositif de calcul (3), **caractérisé en ce que** les données peuvent être transmises par la station d'énergie (1) par l'intermédiaire du terminal mobile (2) au dispositif de calcul (3) même lorsque le terminal mobile (2) à proximité immédiate de la station d'énergie (1) ne peut établir aucune liaison avec le dispositif de calcul (3), dans lequel le terminal mobile (2) transmet les données au dispositif de calcul (3) dès que le terminal mobile (2) dispose d'une telle liaison et **en ce que** le terminal mobile (2) d'un utilisateur du système peut transmettre des données, plus particulièrement des données de facturation, d'au moins un utilisateur précédent de la station d'énergie (1) et peut transmettre les données de l'utilisateur précédent au dispositif de calcul (3).

2. Système selon la revendication 1, **caractérisé en ce qu'**un connecteur est disposé pour l'établissement de la liaison (7) avec le réseau électrique.

3. Système selon la revendication 1 ou 2, **caractérisé en ce que** les moyens (8) pour la transmission d'énergie électrique sont constitués d'au moins une bobine pour la charge inductive et/ou d'un connecteur.

4. Système selon l'une des revendications 1 à 3, **caractérisé en ce que** le dispositif de communication (4) est conçu comme une interface NFC et/ou une interface Bluetooth et/ou une interface infrarouge.

5. Système selon l'une des revendications 1 à 4, **caractérisé en ce qu'**un dispositif d'entrée, plus particulièrement pour l'entrée d'instructions vocales, est prévu.

6. Procédé d'alimentation en énergie d'un consommateur électrique, par exemple pour la charge d'un appareil alimenté par batteries, plus particulièrement d'un véhicule avec un entraînement électrique, de préférence à l'aide d'un système selon l'une des revendications 1 à 5, comprenant les étapes suivantes :
- transmission de données, par exemple de données d'identification, le cas échéant de données de charge, au moyen d'un terminal mobile (2) à la station d'énergie (1),
- activation de l'alimentation en énergie, plus particulièrement du processus de charge, par la station d'énergie et transmission de données, plus particulièrement de données de facturation, de la station d'énergie (1) au terminal mobile (2),
- transmission des données, plus particulièrement des données de facturation, par l'intermédiaire d'un réseau, de préférence mobile, par le terminal mobile (2) à un dispositif de calcul (3), **caractérisé en ce que** des données peuvent être transmises par la station d'énergie (1) par l'intermédiaire du terminal mobile (2) au dispositif de calcul (3) même lorsque le terminal mobile (2) à proximité immédiate de la station d'énergie (1) ne peut établir aucune liaison avec le dispositif de calcul (3), dans lequel le terminal mobile transmet les données au dispositif de calcul dès que le terminal mobile (2) dispose d'une telle liaison et **en ce que** le terminal mobile (2) d'un utilisateur de la station d'énergie (1) peut transmettre des données, plus particulièrement des données de facturation, d'au moins un utilisateur précédent de la station d'énergie (1) et peut transmettre les données de l'utilisateur précédent au dispositif de calcul (3).

7. Procédé selon la revendication 6, **caractérisé en ce que** les données, plus particulièrement les données de charge, sont transmises par une instruction vocal à la station d'énergie (1).

8. Procédé selon la revendication 6 ou 7, **caractérisé en ce que**, en tant que terminal mobile (2), le le consommateur électrique et/ou un smartphone est utilisé.
